# EUROPEAN PATENT SPECIFICATION

(11) **EP 4 165 231 B1**
(45) Date of publication and mention of the grant of the patent: **09.10.2024**
(21) Application number: 21729905.6
(22) Date of filing: 04.06.2021
(51) Int. Cl.: C23C 22/73, C23G 1/24, C23G 1/26, C23F 11/167, C23C 22/18, C23C 22/83

(54) **AQUEOUS PICKLING COMPOSITIONS AND THEIR USE**
WÄSSRIGE BEIZZUSAMMENSETZUNGEN UND IHRE VERWENDUNG
COMPOSITIONS DE DÉCAPAGE AQUEUSES ET LEUR UTILISATION

(30) Priority: 10.06.2020 EP 20179332
(43) Date of publication of application: 19.04.2023
(73) Proprietor: Chemetall GmbH, 60487 Frankfurt (DE)
(72) Inventor: MOHR, Anna, Verena, 60487 Frankfurt am Main (DE); SIX, Marcell, 60487 Frankfurt am Main (DE); KHELFALLAH, Nawel, Souad, 60487 Frankfurt am Main (DE)
(74) Representative: BASF IP Association
(86) International application number: PCT/EP2021/064968
(87) International publication number: WO 2021/249880

(56) References cited:
- EP-A1- 2 090 676
- CN-A- 103 771 600
- CN-A- 105 502 704
- CN-A- 108 911 188
- DE-A1- 102014 203 412

## Description

The present invention relates to an aqueous, neutral pickling composition for removal of rust and scale in a method for pickling metallic substrates and a concentrate to produce such compositions. The present invention further relates to such method and the use of the compositions for pickling metallic surfaces. Furthermore, the invention relates to a method for coating metallic substrates, particularly to improve corrosion protection.

### BACKGROUND

The non-removal of oxide layers and other residuals after thermal treatment of metallic substrates typically raises problems in subsequent conversion coating steps, resulting in a reduced adhesion of subsequent coating layers, particularly coating layers obtained by cathodic electro deposition coating, thus reducing corrosion protection.

Therefore, generally, and particularly in the automotive industry, aqueous cleaning and pickling solutions having rather extreme pH values are used prior to conversion coating. A problem typically associated with highly acidic pickling solutions is that after rinsing the surface there is a tendency of film rust formation. Furthermore, when using highly acidic or highly alkaline compositions, stricter requirements for occupational and industrial safety and safety in transportation must be observed. Moreover, such pickling compositions are more aggressive towards the metallic substrates to be pickled and the equipment.

To overcome such problems, in recent years an increasing number of fluidic, neutral rust and scale removing compositions suitable for iron-based and non-iron metals and alloys, and being applicable in dip methods, flooding methods and spraying methods have been developed. They are suitable to remove oxide layers from metallic surfaces as they occur after thermal deburring, laser cutting and welding operations. Such neutral pickling compositions have many advantages compared to mineral acid based pickling compositions or strong alkaline compositions. Contrary to strong acids and bases, their handling is much easier and it is often possible to clean and pickle the surfaces in one process step. Therefore, an additional cleaning step can often be omitted.

Particularly, neutral compositions based on phosphonic acids such as 1-hydroxyethane-1,1-diphosphonic acid or amino phosphonic acids are used for the above purposes, because they are known to be complexing agents even in a essentially neutral environment. The term "neutral", as used herein, refers to aqueous compositions having a pH value at 55 °C of about 5 to about 9 and thus encompasses slightly acidic as well as slightly alkaline aqueous compositions.

On the other hand, phosphonates are typically not the first choice, when it comes to cleaning and pickling metallic surfaces of different metal composition. This particularly plays a role, when metallic substrates of different composition are to be cleaned and pickled with the same cleaning and pickling composition one after each other or at the same time, in case of pickling pre-assembled metallic components of different metallic composition, such as particularly steel and galvanized steel. This is because phosphonate-based cleaning and pickling solutions often lack a balanced pickling weight loss for different substrates, and have a significantly different effectiveness on the surfaces to be cleaned and pickled, depending on the type of metal or alloy.

WO 2013/156396 A1 relates to the improvement of the cleaning performance of protease containing detergents or cleaning agents with respect to protease-sensitive soiling. These cleaning agents rely on the activity or the proteases. WO 2013/156396 A1 discloses that it is known, that protease containing detergents show an improved cleaning performance, when negatively charged polymers are contained. However, in detergents containing high amounts of surfactants their combination with negatively charged polymers becomes problematic. To overcome problems associated therewith, specific phosphonates were added. It is also mentioned that phosphonate mixtures may be employed. However, no specific combinations are mentioned. Further, the detergent concentrates disclosed in Example 1 of WO 2013/156396 A1 contain a comparatively low amount of water, while the detergent in its usage form contains more than 99.8 wt.-% of water. Neither the pH value of these compositions is optimized nor are they made to remove metal oxides from metallic substrates, since their object is to clean textiles and not to pickle metallic surfaces.

EP 2 090 676 A1 discloses a method for rust and/or corrosion products removal from a metallic substrate, in particular stainless steel, and an aqueous pickling composition that contains a reducing agent and a phosphonic acid as chelating agent.

DE 10 2014 203412 A1 discloses a method of simultaneously pickling and passivating stainless steel surfaces by contacting with an aqueous composition comprising a mixture of hydroxyethylaminodi(methylenephosphonic acid) (HEMPA) and aminoalkyl phosphonic acid, and an oxidizing agent.

Consequently, there is a continuing need for improved aqueous, neutral compositions providing an improved, particularly balanced pickling behavior when used on different substrates and which do not adversely affect subsequent conversion coating processes. Particularly, the adhesion of subsequent coating layers such as electrodeposition coating layers, filler, basecoat and/or clear coat layers should not be deteriorated.

### SUMMARY

This need was met by providing an aqueous composition having a pH value at 55 °C in the range from 5 to 9, containing at least two different amino organophosphonic acid derivatives of formula (I) 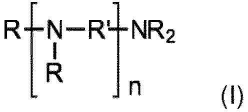 wherein
residues R independently of each other are CH₂-PO(OR")₂,
residues R' independently of each other are alkylene residues with 2 to 4 carbon atoms,
residues R" independently of each other are H, Na, K, Li or NH₄; and
n is an integer from 0 to 4;
and wherein the at least two different amino organophosphonic acid derivatives differ in the value of n; and wherein the amount of all amino organophosphonic acid derivatives of formula (I) contained in the composition ranges from 1.0 to 8.0 wt.-, based on the total weight of the composition and being calculated as free acid.

In the following such composition is called "composition according to the invention" or "pickling composition according to the invention".

The present invention further provides a concentrate containing the ingredients of the composition according to the invention in a higher concentration, which allows the preparation of the composition according to the invention at the place, where it is needed, by dilution with a diluent comprising water and optionally organic solvents and, if necessary, by subsequently adjusting the pH value.

The invention further provides a method for pickling a metallic substrate comprising at least one step of contacting a metallic substrate with a composition according to the invention.

In the following, this method is called "pickling method according to the invention".

Yet another object of the present invention is a method for coating a metallic substrate comprising at least
(a) the pickling method according to the invention, followed by
(b) a step of coating the thus pickled metallic substrate with a conversion coating composition, optionally followed by
(c) a step of applying an electrodeposition coating composition; and optionally followed by
(d) one or more steps of applying one or more further coating composition(s).

In the following, this method is called "coating method according to the invention".

A further object of the present invention is the use of the compositions according to the invention for pickling metallic substrates.

In the following, this use is called "use according to the invention".

### DETAILED DESCRIPTION

### Composition according to the invention

Since the composition according to the present invention is an aqueous composition, the main ingredient is water. Preferably the content of water, based on the total weight of the composition ranges from 70 wt.-% to 99 wt.-%, more preferred 80 wt.-% to 98 wt.-%, even more preferred 90 wt.-% to 97.5 wt.-% and most preferred 95 to 97.5 wt.-%.

The composition according to the present invention may also contain minor amounts of one or more organic solvents which are preferably miscible with or dissolve in water. Preferably their amount is 10 wt.-% or less, more preferred less than 5 wt.-% and even more preferred less than 3 wt.-% or less than 1 wt.-%, based on the total weight of the composition according to the present invention. Most preferred the only solvent used in the composition according to the present invention is water.

The compositions according to the invention are preferably aqueous solutions or aqueous dispersions, most preferred aqueous solutions.

### Amino organophosphonic acid derivatives of formula (I)

The inventors of the present invention surprisingly found that unlike the use of none-amino organophosphonic acids and the use of only one type of organophosphonic acid derivatives of formula (I) in pickling compositions, it is highly advantageous to use mixtures of at least two different amino organophosphonic acid derivatives of formula (I) 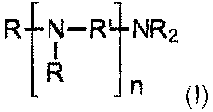 wherein
residues R independently of each other are CH₂-PO(OR")₂,
residues R' independently of each other are alkylene residues with 2 to 4 carbon atoms,
residues R" independently of each other are H, Na, K, Li or NH₄; and
n is an integer from 0 to 4;
and wherein the at least two different amino organophosphonic acid derivatives differ in the value of n, in the pickling compositions according to the invention.

Compositions according to the invention generally provide a more balanced pickling, when used for pickling different metallic substrates. The extend of pickling can be compared between different substrates by the determination of the pickling weight loss.

The pickling weight loss is the loss of material in g/m² in the pickling process. The amount should neither be too low, indicating an insufficient pickling nor too high, indicating a surface treatment being too harsh, thus increasing the risk of damaging the surface of the substrate, leading to an uneven surface and thus causing an inferior adhesion of subsequent coating layers.

A sufficient pickling weight loss starts preferably at about 0.5 g/m² and should preferably not exceed about 2.5 g/m², whereby exceptions from this range might be acceptable depending on the desired application. A balanced pickling is typically obtained, when the difference in pickling weight loss (Δpwl), comparing different metallic substrates pickled with the same pickling composition, is preferably not larger than about 0.6 g/m², even more preferred not larger than 0.4 g/m² and most preferred not larger than 0.3 or 0.2 g/m². The pickling weight loss, particularly the afore-mentioned values and the (Δpwl) are determined as described in the experimental part of the application. The pickling weight loss values and Δpwl values as mentioned above, preferably apply to CRS (cold rolled steel) and HDG (hot dip galvanized steel) and the comparison of both. However, the pickling compositions according to the invention are also suitable for other substrates.

It was particularly surprising that organophosphonic acid derivatives of formula (I) could be used in the composition according to the invention, which, if used alone cause an unacceptable high pickling weight loss, while when used in mixture with at least one further organophosphonic acid derivative of formula (I) a more balanced pickling results.

The amino organophosphonic acid derivatives comprised in the compositions according to the invention are those of formula (I) 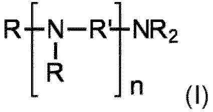 wherein
residues R independently of each other are CH₂-PO(OR")₂,
residues R' independently of each other are alkylene residues with 2 to 4 carbon atoms,
residues R" independently of each other are H, Na, K, Li or NH₄; and
n is an integer from 0 to 4.

To provide aqueous compositions according to the present invention having a pH value at 55 °C being in the range from 5 to 9, it might become necessary to neutralize at least some of the acidic hydrogen atoms present in residue CH₂-PO(OH)₂, of the free acids, if free acids are employed, thus forming alkali salts or ammonium salts of the amino organophosphonic acids. This is preferably done *in situ,* i.e. in the already aqueous composition by pH adjustment with KOH, NaOH, LiOH and/or NH₄OH, particularly preferred with aqueous solutions of these bases. However, it is also possible to prepare the salts in advance and to dissolve the salts in the aqueous medium. Most preferred R" are independently selected from H, K and Na.

In formula (I) it is further preferred that R' is an alkylene with 2 or 3 carbon atoms, most preferred R' is CH₂CH₂.

Moreover, n is preferably an integer from 0 to 3, even more preferred n = 0, 1 or 2 and most preferred 0 or 1. In the latter case, in one of the least two different amino organophosphonic acid derivatives n = 0, while in the other one n = 1.

While all definitions of R, R', R" and n can independently be combined, it is particularly preferred that residues R independently of each other are CH₂-PO(OR")₂, residues R' independently of each other are alkylene residues with 2 or 3 carbon atoms, residues R" independently of each other are H, Na or K; and n is an integer from 0 to 3.

Most preferred residues R independently of each other are CH₂-PO(OR")₂, residues R' are CH₂CH₂, residues R" independently of each other are H, Na or K; and n is 0, 1 or 2 even more preferred n = 0 or 1.

Examples of particularly preferred amino phosphonic acids and salts thereof are amino tris(methylene phosphonic acid) (i.e. R = CH₂-PO(OH)₂, R' = CH₂CH₂ and n = 0), ethylenediamine tetra(methylene phosphonic acid) (i.e. R = CH₂-PO(OH)₂, R' = CH₂CH₂ and n = 1) and diethylenetriamine penta(methylene phosphonic acid) (i.e. R = CH₂-PO(OH)₂, R' = CH₂CH₂ and n = 2) and the Li, K, Na and ammonium salts thereof. Amongst the salts of these exemplified amino phosphonic acids the sodium and/or potassium salts are preferred.

It was generally found that a particularly balanced pickling is observed, when using different amino phosphonic acid derivatives of formula (I), if the different values for n do not differ by more than 2, better by not more than 1. Thus, if only two different amino phosphonic acid derivatives of formula (I) are used, it is preferred that Δn = 1 or 2, preferably Δn = 1.

### pH Value

The aqueous compositions according to the present invention have a pH value (determined at 55 °C) in the range from 5 to 9, preferably 5.5 to 8.5, more preferred from 6.0 to 8.0 and most preferred from 6.5 to 7.5.

### Amounts of Amino Organophosphonic Acid Derivatives

The compositions according to the invention need to contain at least two amino organophosphonic acid derivatives of formula (I), which differ in the value of n. With other words, the at least two amino organophosphonic acid derivatives are only considered different in the meaning of the above definition, when differing in the value of n. If n is the same for two amino organophosphonic acid salts and one of both is a sodium salt, while the other one is a potassium salt, the requirement of the above definition is not fulfilled. The same applies for amino organophosphonic acid derivatives which differ in residue R' while having the same value of n. The term "derivatives" in "amino organophosphonic acid derivatives" includes the free acids (i.e. R" = H).

The amount of all amino organophosphonic acid derivatives of formula (I) having the same value of n preferably ranges from 0.5 to 4.0 wt.-%, more preferred 1.0 to 3.0 wt.-% and most preferred 1.2 to 2.5 wt.-% based on the total weight of the composition according to the invention and being calculated as free acid (i.e. R = CH₂-PO(OH)₂).

All wt.-% ranges used in the context of the total specification do not only apply to the broadest definition of the respective ingredient(s), but also to any further preferred embodiment of the ingredient(s).

The amount of all amino organophosphonic acid derivatives of formula (I) contained in the composition according to the invention ranges from 1.0 to 8.0 wt.-% more preferably 1.5 to 6.0 wt.-% and even more preferred 2.0 to 5.0 wt.-% such as 2.2 to 4.0 wt.-% based on the total weight of the composition of the invention and being calculated as free acid (i.e. R = CH₂-PO(OH)₂).

### Weight Ratios of Amino Organophosphonic Acid Derivatives

The weight ratio of the sum of amino organophosphonic acid derivatives of formula (I) possessing the same value of n to the sum of amino organophosphonic acid derivatives of formula (I) having a different, but within this group identical value of n is preferably in the range from 1:4 to 4:1, more preferred 1:3 to 3:1, even more preferred from 1:2 to 2:1 for any combination of two different values of n. The weight ratios are calculated for the free acid form of the amino organophosphonic acid derivatives of formula (I).

With other words, if only a first compound and a second compound are present, the first compound having a particular value of n and the second compound having another particular value of n, the above weight ratios should be observed. If a further third compound is present, the ratio of the first compound to the third compound as well as the second compound to the third compound should also observe the above weight ratios.

### Further ingredients

The compositions of the present invention may also contain further ingredients such as additives, such ingredients being necessarily different from the amino organophosphonic acid derivatives of formula (I). The further ingredients also differ from water and organic solvents.

If present, such additives typically not interfere with the pickling effect provided by the compositions of the present invention, but add further properties such as an enhanced shelf-life, e.g. obtained by adding preservatives; or an integrated cleaning or degreasing effect e.g. obtained by adding surfactants, preferably non-ionic surfactants.

However, it was surprising that small amounts of vinyl acetate-vinyl pyrrolidone random copolymers, can be employed in the composition according to the invention to fine-tune the extent of pickling without changing the amounts of pickling agents. The term "copolymer" as used herein refers to polymers composed of at least two different monomers, preferably two different monomers or three different monomers (terpolymers). Such vinyl acetate-vinyl pyrrolidone random copolymers preferably possess a molar ratio of vinyl acetate to vinyl pyrrolidone from 30:70 to 70:30, more preferred 30:70 to 60:40 and even more preferred from 30:70 to 50:50, such as 40:60. Typically, these copolymers are prepared by free radical polymerization. Since the monomers carry just one polymerizable group, the copolymers are linear copolymers. Preferably the weight average molecular weight M_{w} of the copolymers, determined by gel permeation chromatography (GPC) is in the range from 15,000 to 100,000, more preferred 20,000 to 90,000, even more preferred 30,000 to 80,000, such as 50,000 to 70,000 g/mol. GPC can be carried out according to DIN 55672-3:2016-03. The polydispersity of the copolymers M_{w}/Mₙ is preferably in the range from 3 to 7, more preferred 4 to 6.

It is also possible to use copolymers, which only differ from the afore-mentioned vinyl acetate-vinyl pyrrolidone copolymers in that preferably 0 to 10 mol-%, more preferred 1 to 8 mol-% and most preferred 1 to 5 mol-% of the combined amount vinyl acetate and vinyl pyrrolidone are replaced by a third monoethylenically unsaturated monomer selected from vinyl monomers, acrylate monomers and methacrylate monomers. The above weight average molecular weight ranges also apply to these copolymers.

Preferably, the compositions according to the invention do not contain negatively charged, i.e. anionic polymers such as salts of poly(meth)acrylic acid and/or maleic acid containing polymers or polycarboxylates.

Unlike household cleaning compositions, such as detergents, particularly laundry detergents, the compositions according to the present invention do not contain proteases, preferably no enzymes at all, because pickling action clearly differs from enzymatic cleavage reaction such as cleavage of protein-based dirt and/or contaminations.

Preferably, the total amount of further ingredients, which differ from the amino organophosphonic acid derivatives of formula (I), is less than 50 wt.-%, more preferred less than 40 wt.-%, even more preferred less than 30 wt.-% or less than 20 wt.-%, such as less than 10 wt.-% of the combined amount of ingredients consisting of the further ingredients and the amino organophosphonic acid derivatives of formula (I).

Preferably, the compositions according to the invention do not contain other pickling agents or metal ion chelating agents beside the amino organophosphonic acid derivatives of formula (I).

### Concentrate According to the Invention

The present invention further relates to a concentrate comprising a liquid medium composed of water and/or organic solvents, the amino organophosphonic acid derivatives of formula (I) and any further ingredients of the composition according to the invention. The sum of the amount of amino organophosphonic acid derivatives of formula (I) and the optionally contained further ingredients preferably ranges from 10 wt.-% to 90 wt.-% of the total weight of the concentrate, more preferred 20 wt.-% to 90 wt.-%, even more preferred 30 wt.-% to 90 wt.-% or 40 wt-% to 90 wt.-% and most preferred 50 wt.-% to 90 wt.-%, based on the total weight of the concentrate.

The concentrates according to the invention preferably do not contain proteases and are preferably enzyme-free.

A concentrate allows the preparation of the composition according to the present invention where it is needed, by diluting with a diluent comprising water and optionally organic solvents and, if necessary, followed by subsequently adjusting the pH value at 55 °C in the range from 5 to 9, preferably 5.5 to 8.5, more preferred from 6.0 to 8.0 and most preferred from 6.5 to 7.5. The concentrate is preferably an aqueous concentrate.

Preferably, the dilution ratio is from 1:1 (volume of the concentrate : volume of the diluent) to 1:50, more preferred 1:2 to 1:10 and most preferred 1:3 to 1:5.

Using such concentrates reduces the need of large storage capacities and facilitates transportation to the places of use.

### Pickling Method According to the Invention

The pickling method according to the present invention includes at least one step of contacting a metallic substrate with a composition according to the present invention.

### Metallic Substrate

The term "metallic substrate" as used herein includes substrates of any shape, such as flat metallic substrates like simple panels or coils, but also metallic substrates with complex shapes like automotive bodies or parts thereof. The term "metallic" as used herein comprises pure metals and metal alloys. Particularly preferred examples of metals and alloys are cold-rolled steel, galvanized steel such as hot-dip galvanized steel or electrolytically galvanized steel and aluminum and its alloys. Particularly preferred substrates are cold-rolled steel and galvanized steel, such as hot-dip galvanized steel. Moreover, the term "substrate" also comprises pre-assembled metal parts, the metal parts being of the same metal or alloy or the metal parts being of at least two different metals or alloys (multi-metal capability of the method).

### Contacting the Metallic Substrate with a Composition according to the Invention

The step of contacting a metallic substrate with a composition according to the invention is preferably a step selected from the steps of
(a) dipping a metallic substrate into a composition according to the invention,
(b) flooding a metallic substrate with a composition according to the invention; and
(c) spraying a metallic substrate with a composition according to the invention.

While contacting the metallic substrate the composition can be agitated, e.g. by stirring and the like.

The metallic substrate is preferably contacted with the composition according to the invention for period ranging from 1 to 15 min, more preferred a period ranging from 3 to 12 min and most preferred a period ranging from 5 to 10 min.

The temperature of the composition according to the invention during the step of contacting the metallic substrate preferably ranges from 20 to 70 °C, more preferred 30 to 65 °C and most preferred 40 to 60 °C such as 50 to 60 °C.

Taking into account the maintenance of the temperature of the composition according to the invention in the above ranges and optimizing the contact area of the substrate during contacting, it is most preferred to contact the metallic substrate by dipping the metallic substrate into the composition according to the invention.

### Optional further Steps of the Pickling Method According to the Invention

The pickling method according to the invention can comprise one or more steps *prior* to the at least one step of contacting a metallic substrate with a composition according to the present invention.

It is to be emphasized that the optional further steps described in the following are not necessarily the only optional steps possible in the pickling method according the invention. Particularly any further cleaning, rinsing and/or drying step may be carried out in addition to the preferred optional steps, if desired.

Particularly, the pickling method may comprise, prior to the at least one step of contacting a metallic substrate with a composition according to the present invention (iv), at least one cleaning step (i) preferably followed by at least one rinsing step (ii), even more preferred followed by two rinsing steps (ii) and (iii).

Therefore, a preferred pickling method according to the present invention comprises
(i) a step of contacting a metallic substrate with a cleaning composition, optionally followed by
(ii) a step of rinsing the metallic substrate with a first rinsing composition, optionally followed by
(iii) a step of rinsing the metallic substrate with a second rinsing composition, followed by
(iv) a step of contacting a metallic substrate with a composition according to the present invention.

Step (i) of contacting the metallic substrate with a cleaning composition can be carried out in the same manner as the step of contacting the metallic substrate with a composition according to the present invention except for using the cleaning composition instead of the composition according to the present invention. Most preferred are spray cleaning and/or dip cleaning. The temperature of the cleaning composition used in step (i) is preferably in the range from 20 to 70 °C, more preferred 30 to 65 °C and most preferred 40 to 60 °C such as 45 to 60 °C. The duration of contacting the metallic substrate with the cleaning composition preferably ranges from 0.5 min to 15 min, more preferred 1 min to 10 min, most preferred 3 min to 5 min.

The cleaning composition preferably has an alkaline pH value in the range from 8 to 12, more preferred 9 to 11, such as 10 to 11 and preferably contains at least one of caustic, phosphonates, surfactants and complexing agents.

Suitable cleaning agents are for example commercially available from Chemetall GmbH (Frankfurt, Germany) under the tradename Gardoclean^{®}.

The rinsing steps (ii) and (iii) are preferably carried out by spray or dip applying, preferably dip applying the respective rinsing compositions. The rinsing compositions are typically water or water containing diluted ingredients of the previous treatment step due to the unavoidable drag over from the previous bath, if dip application is chosen.

The first rinsing composition preferably has a pH value in the range from 9 to 12, due to drag over from the previous cleaning composition and preferably contains all ingredients of the cleaning composition, but water-diluted.

The second rinsing composition preferably has a pH value in the range from 8 to 11, due to the drag over from the first rinsing compositions and preferably contains all ingredients of the first rinsing composition., but water-diluted.

The rinsing steps can also be carried out with water only, particularly in laboratory-scale experiments.

The above sequence of steps (i) to (iv) is also a preferred embodiment of step (a) of the method for coating according to the invention.

The pickling method according to the invention can also comprise one or more steps *subsequent* to the at least one step of contacting a metallic substrate with a composition according to the present invention (iv), namely one or more rinsing steps (v) to (vii).

Therefore, a preferred pickling method according to the present invention may also comprise
(iv) a step of contacting a metallic substrate with a composition according to the present invention, followed by
(v) a step of rinsing the metallic substrate with a third rinsing composition, optionally followed by
(vi) a step of rinsing the metallic substrate with a fourth rinsing composition, and optionally followed by
(vii) a step of rinsing the metallic substrate with a fifth rinsing composition.

The rinsing steps (v), (vi) and (vii) are preferably carried out by spray or dip applying the respective rinsing compositions. The rinsing compositions can just be composed of water, but are typically the water-diluted compositions from the respective previous steps due to the drag over from the respective previous steps. Carrying out the rinsing steps (v) to (vii) is particularly preferred if the pickling method according to the present invention is carried out continuously. In such case an accumulation of iron compounds in the pickling composition occurs if iron containing metallic substrates are pickled. Such iron compound can be washed-off in the respective rinsing step(s).

The above sequence of steps (iv) to (vii) is also a preferred embodiment of step (a) of the method for coating according to the invention.

To keep such iron compounds in solution, it is preferred that the third rinsing composition preferably has an acidic pH value in the range from 1 to 3 and preferably further contains the ingredients of the previous pickling composition, but water-diluted.

To avoid the formation of a rust film after the acidic rinse, the fourth rinsing composition preferably has an alkaline pH value in the range from 9 to 12 and preferably contains caustic plus a complexing agent. Rust film formation may particularly occur, if the pickling method is run as a continuous process and this process is interrupted and/or the time between the steps becomes too long.

If the pickling method according to the present invention is followed particularly by a phosphate conversion coating step, it is preferred that the fifth rinsing composition preferably has a pH value in the range from 9 to 10 and contains the ingredients of the forth rinsing composition, due to drag over, but water-diluted.

Typically, prior to a phosphate conversion coating step an activation step is carried out and prior to this conversion coating step it is neither preferred that the pH value of a rinsing composition is too high or too low. Therefore, it is particularly preferred that the pH value of the fifth rinsing solution is in the afore-mentioned slightly alkaline or neutral range. Particularly preferred in step (vii) is rinsing with water.

Of course, all steps prior to the step of contacting a metallic substrate with a composition according to the present invention and the steps subsequent to the step of contacting a metallic substrate with a composition according to the present invention can be carried out in combination in the pickling method according to the present invention.

In such case, the pickling method according to the invention preferably comprises
(i) a step of contacting a metallic substrate with a cleaning composition, optionally followed by
(ii) a step of rinsing the metallic substrate with a first rinsing composition, optionally followed by
(iii) a step of rinsing the metallic substrate with a second rinsing composition, followed by
(iv) a step of contacting the metallic substrate with a composition according to the present invention, followed by
(v) a step of rinsing the metallic substrate with a third rinsing composition, optionally followed by
(vi) a step of rinsing the metallic substrate with a fourth rinsing composition, and optionally followed by
(vii) a step of rinsing the metallic substrate with a fifth rinsing composition.

The cleaning composition, the rinsing compositions and the composition according to the invention being defined as above. The above sequence of steps (i) to (vii) is also a preferred embodiment of step (a) of the method for coating according to the invention.

### Coating Method According to the Invention

It is further provided a method for coating a metallic substrate comprising at least
(a) the pickling method according to the invention, followed by
(b) a step of coating the thus treated metallic substrate with a conversion coating composition obtaining a conversion coating layer, optionally followed by
(c) a step of applying an electrodeposition coating composition obtaining an electrodeposition coating layer; and optionally followed by
(d) one or more steps of applying one or more further coating composition(s) obtaining one or more further coating layer(s).

It is to be emphasized that the steps of the coating method according to the invention as described above are not necessarily the only steps possible in the coating method according the invention. Particularly any further rinsing, drying and/or curing step(s) may be carried out in addition to the above steps, if desired.

Thus, it is preferred to have at least one rinsing step (b") subsequent to step (b) and prior to step (c). It is also preferred to have at least one rinsing step (c') followed by a curing step (c") subsequent to step (c).

Preferably, the coating obtained in the coating method according to the invention is a multilayer coating. Even more preferred the coating obtained in the coating method according to the invention is a coating comprising a conversion coating layer, an electrodeposition coating layer and preferably at least one further coating layer.

### Step (a)

Thus, the coating method according to the invention comprises - as a pretreatment step - at least step (a), i.e. the pickling method according to the invention, particularly at least step (iv) of the pickling method according to the invention.

More preferably step (a) comprised in the coating method according the invention comprises steps (iv), (v), (vi) and (vii) of the pickling method of the invention.

Even more preferred, step (a) comprised in the coating method of the invention comprises steps (i) to (vii) of the pickling method according to the invention.

### Step (b)

Generally, any known conversion coating composition can be used in step (b) of the method for coating according to the present invention.

The conversion coating compositions used in the present invention are preferably acidic conversion coating compositions.

Preferably the conversion coating compositions used in the method for coating according to the present invention are selected from
i. phosphate conversion coating compositions, such as Ni-containing and Ni-free zinc phosphating compositions and trication phosphating compositions, the phosphate conversion coating compositions containing zinc ions and at least one of manganese ions and nickel ions,
ii. organosilane based conversion coating compositions containing at least one organosilane and/or its hydrolysis products and/or its condensation products; and
iii. passivating conversion coating compositions containing at least one compound selected from the groups of zirconium compounds, titanium compounds and hafnium compounds.

If a phosphate conversion step, particularly a zinc phosphating step or a trication phosphating step is carried out as step (b), it is preferred to carry out an additional activation step (a') after step (a) and prior to step (b). If carried out, the activation step (a') is carried out by contacting the metallic substrate subsequent to step (a) and prior to step (b) with an activation composition. Contacting is preferably carried out by dipping, flooding or spraying as descripted for contacting a metallic substrate with the composition according to the invention. Most preferred is contacting the metallic substrate by dip application of the activation composition. The duration of the contacting step with the activation composition preferably ranges from 5 to 300 seconds, more preferred 10 to 200 seconds and most preferred 20 to 90 seconds such as 30 to 60 seconds. Activation compositions or solutions are for example available from Chemetall GmbH (Frankfurt, Germany) under the trademark Gardolene^{®} V and Gardolene^{®} ZL.

If an activation step is carried out, the activation composition used therein preferably contains zinc phosphate crystals and/or titanium phosphate crystals, which facilitate the deposition of the phosphate conversion layer.

If a phosphate conversion step, particularly a zinc phosphating step or a trication phosphating step is carried out as step (b), it is preferred to carry out an additional passivation step (b') after step (b) and prior to step (c). Passivation compositions are for example available from Chemetall GmbH (Frankfurt, Germany) under the trademark Gardolene^{®} D.

Amongst the zinc phosphating compositions, Ni-containing compositions may be employed. However, for environmental reasons, Ni-free zinc phosphating conversion coating compositions are preferred, which contain Zn ions and Mn ions. A further variant of zinc phosphating conversion coating compositions are the so-called trication phosphate conversion coating compositions containing Zn, Mn and Ni ions. Phosphate conversion coating compositions are for example available from Chemetall GmbH (Frankfurt, Germany) under the trademark Gardobond^{®}.

Organosilane-based conversion coating compositions preferably contain at least one organosilane, the term "organosilane" including its hydrolysis products and condensation products, and optionally compounds selected from the group of zirconium compounds, titanium compounds and hafnium compounds. Such compositions are for example available from Chemetall GmbH (Frankfurt, Germany) under the trademark Oxsilan^{®} to produce thin-film systems.

Passivating conversion coating compositions preferably contain at least one compound selected from the groups of zirconium compounds, titanium compounds and hafnium compounds, more preferably a fluoro complex of titanium, zirconium and/or hafnium. Such conversion coating compositions optionally contain one or more organosilanes the term "organosilane" including its hydrolysis products and condensation products.

### Step (c)

In step (c) an electrodeposition coating composition is applied to the conversion coating layer formed in step (b). Electrodeposition coating compositions are aqueous coating compositions which are applied by dip coating, i.e. dipping the pickled, conversion coated metallic substrate into the electrically conductive, aqueous electrodeposition coating composition and applying a direct voltage between the substrate and a counter electrode.

The electrodeposition coating composition is an anodic or cathodic electrodeposition coating composition, preferably a cathodic electrodeposition coating composition.

Cathodic electrodeposition coating compositions are preferably selected from epoxy-type and poly(meth)acrylate-type electrodeposition coating compositions. They are applied according to the coating manufacturers specifications.

Subsequent to step (c) the formed electrodeposition coating layer is preferably rinsed (step (c')) and cured (step (c")) according to the paint manufacturers specifications.

### Step (d) or Steps (d)

Subsequent to the electrodeposition coating step (c) it is preferred to apply one or more further coating compositions. Such further coating compositions are preferably selected from water-based coating compositions, solvent-borne coating compositions or UV-curing coating compositions. However, so-called powder coating compositions can also be applied.

Particularly preferred at least one of a filler coating composition, a basecoat composition and a clear coat composition is applied. If a plurality of coating layers is applied (i.e. at least two coating compositions), the application can be carried out wet-in-wet and afterwards the coating layers can be cured simultaneously. However, it is also possible to carry out drying steps and/or curing steps between the application of at least some or all of the plurality of coating compositions as may be used in step(s) (d).

The method for coating metallic substrates according to the invention provides well adhering, corrosion-resistant coatings, preferably multilayer coatings.

### Use according to the Invention

The invention further provides the use of the compositions according to the invention for pickling metallic substrates, the metallic substrates being the metallic substrates as described above.

The compositions and their use provide for a balanced and mild, but sufficiently high pickling, if applied to different metallic substrates, thus allowing to pickle different metallic substrates with the same pickling composition one after each other, or if desired, in form of pre-assembled parts comprising different metallic substrates.

In the following the invention will be further explained by providing working examples.

### EXAMPLES

### Testing Procedures

### Determination of the Pickling Weight Loss

Two test panels made of CRS (cold-rolled steel) and HDG (hot dip galvanized steel) were in each case weighed before treatment with one of the pickling solutions.

After pickling, all panels were rinsed with deionized water, dried and weighed. The weight loss caused by the treatment with pickling solution (i.e. the pickling weight loss) in each case represents the removal of material. In each case the average of the three panels was calculated.

The pickling weight loss should preferably not exceed 2.5 g/m², because surface defects are likely to occur resulting in insufficient adhesion of any subsequent coating layers. Furthermore, the pickling weight loss should preferably not be below 0.5 g/m², because otherwise insufficient pickling is likely.

A balanced pickling weight loss for a specific pickling composition is achieved, if the difference in pickling weight loss for CRS and HDG is 0.6 g/m² or less and the pickling weight loss for both materials is in the range from 0.5 g/m² to 2.5 g/m².

### Determination of the Conversion Coating Layer Weight

The conversion layer weight for the pickled zinc phosphatized metallic substrates is determined by XRF analysis and expressed in g/m², calculated as P₂O₅.

In case of the pickled zinc phosphatized metallic substrates, the conversion layer weight is supposed to be good, if it does not exceed 4.0 g/m² for CRS and if it does not exceed 3.5 g/m² for HDG.

The conversion layer weight for the pickled Oxsilan^{®} treated metallic substrates is determined by XRF analysis and expressed in mg/m², calculated as Zr.

In case of the pickled Oxsilan^{®} 9832 treated metallic substrates, the conversion layer weight is supposed to be good, if it does not exceed 150 g/m² for CRS and if it does not exceed 150 g/m² for HDG. And, in case of the pickled Oxsilan^{®} 9810/2 treated metallic substrates, the conversion layer weight is supposed to be good, if it does not exceed 200 g/m² for CRS and if it does not exceed 150 g/m² for HDG.

### Cross-Cut Adhesion Test

The pickled, conversion coated and electrodeposition coated metallic substrates were subjected to the cross-cut adhesion test according to DIN EN ISO 2409.

If no delamination is observed, the results are rated "0", complete delamination is rated "5". All other grades of delamination are between "0" and "5". An acceptable delamination is rated "0" or "1". The results are average results from two panels.

### Electrochemical Delamination Test

The pickled, conversion coated and electrodeposition coated metallic substrates were subjected to the electrochemical delamination test according to the current AA-0175 norm from BMW.

Delamination is measured in millimeter [mm]. An acceptable delamination is less 2 mm. The results are average results from two panels.

### Preparation Examples

### Pickling of Metallic Substrates

### Pickling for the determination of the pickling weight loss

Panels made of CRS (cold-rolled steel) and HDG (hot dip galvanized steel) were cleaned with an aqueous solution of Gardoclean^{®} S5411 (20 g/L; pH value 10.5) at a temperature of 55 °C for 3 min by spray cleaning and 5 min by dip cleaning. Afterwards the panels were rinsed with water containing the ingredients of the drag over of the previous composition (cleaner bath).

Two panels in each case were immersed for 10 minutes in a bath comprising one of the inventive pickling compositions I1 or I2; or one of the comparative pickling compositions C1, C2 or C3 (see Table 1). The compositions were aqueous solutions of compounds A, B or C (comparative); or aqueous solutions of inventive mixtures of compounds B and C and optionally D, as shown in Table 1. The baths had a temperature of 55 °C. The panels were rotated at a speed of 250 rpm.

**Table 1**

| Pickling Composition | Compound(s) | Amount [wt.-%] | pH value¹ |
|---|---|---|---|
| C1 | A | 1.3 | 7.5 |
| C2 | B | 1.3 | 7.5 |
| C3 | C | 1.3 | 7.5 |
| I1 | B | 1.3 | 7.5 |
| | C | 1.3 | |
| I2 | B | 1.3 | 7.5 |
| | C | 1.3 | |
| | D | 0.2 | |

| | | | |
|---|---|---|---|
| ¹ adjusted by addition of a 50 wt.-% KOH solution in water A: 1-hydroxyethane-1,1-diphosphonic acid B: compound of formula (I) with R = CH₂-PO(OH)₂, R' = CH₂CH₂ and n = 0 C: compound of formula (I) with R = CH₂-PO(OH)₂, R' = CH₂CH₂ and n = 1 D: vinyl acetate-vinyl pyrrolidone (40:60) copolymer (molar ratio) | | | |

After pickling the panels, the panels were taken out of the baths and rinsed with water containing some drag over from the previous step. The thus pickled panels were dried and used to determine the pickling weight loss according to the above described procedure.

### Pickling as Pretreatment before carrying out the Coating Steps

Further panels made of CRS and HDG, respectively, were cleaned and rinsed as described above and subsequently immersed for 5 and 10 minutes, respectively, in a bath comprising one of the pickling compositions as shown in Table 2. The pickling compositions are inventive aqueous solutions of mixtures of compounds B and C (I3) and B and E (I4) in the respective amounts. The baths had a temperature of 55 °C. The bath solution was stirred at a speed of 250 rpm.

**Table 2**

| Pickling Composition | Compound(s) | Amount [wt.-%] | pH value¹ |
|---|---|---|---|
| I3 | B | 1.3 | 6.8 |
| | C | 1.3 | |
| I4 | B | 1.3 | 6.8 |
| | E | 1.3 | |

| | | | |
|---|---|---|---|
| ¹ adjusted by addition of KOH solution in water B: compound of formula (I) with R = CH₂-PO(OH)₂, R' = CH₂CH₂ and n = 0 C: compound of formula (I) with R = CH₂-PO(OH)₂, R' = CH₂CH₂ and n = 1 E: compound of formula (I) with R = CH₂-PO(OH)₂, R' = CH₂CH₂ and n = 2 | | | |

The thus pickled panels were first rinsed with slightly acidic water and subsequently rinsed with slightly alkaline water prior to conversion coating the thus pickled metallic substrates were used wet before carrying out conversion coating.

### Conversion Coating of Pickled Metallic Substrates

The pickled test panels made of CRS and HDG (pickled with the pickling composition according to Table 2) were in each case contacted with either a zinc phosphate based conversion coating composition (available from Chemetall GmbH, Frankfurt, Germany) or one of two different silane based conversion coating compositions (Oxsilan^{®} 9832 or Oxsilan^{®} 9810/2, both commercially available from Chemetall GmbH, Frankfurt, Germany).

### Zinc Phosphating Conversion Coating

The panels to be coated with the zinc phosphate conversion coating composition were activated with Gardolene^{®} V 6559 (commercially available from Chemetall GmbH, Frankfurt, Germany) by dipping the panels into a 1 g/L solution of Gardolene^{®} V 6559 for 30 to 60 s at room temperature (about 23 °C).

Zinc phosphating was carried out by dip coating the activated panels into Gardobond^{®} 24 T (commercially available from Chemetall GmbH, Frankfurt, Germany) for 3 min at 55 °C.

Subsequently, the panels coated with the zinc phosphate conversion coating composition were passivated with Gardolene^{®} D 6800/8 (commercially available from Chemetall GmbH, Frankfurt, Germany) by dipping the panels into a 2.1 g/L solution of Gardolene^{®} D 6800/8 (pH 4.3) for 30 sec at room temperature (about 23 °C).

### Silane-based Conversion Coating

The panels to be coated with the silane-based conversion coating composition were neither activated prior to conversion coating, nor passivated after conversion coating.

To produce the conversion coating layers, the pickled panels were dipped in a bath comprising the respective conversion coating composition (Oxsilane^{®} 9832 or Oxsilane^{®} 9810/2) for 3 min at a temperature of 32 °C.

After conversion coating and prior to electrodeposition coating the conversion coated, pickled metallic substrates were rinsed in deionized water.

The thus conversion coated panels were subjected to the determination of the conversion layer weight as described above.

### Electrodeposition Coating of The Conversion Coated, Pickled Metallic Substrates

The conversion coated, pickled CRS panels were subjected to electrodeposition coating with CathoGuard^{®} 800 electrodeposition coating composition, which is commercially available from BASF Coatings GmbH (Münster-Hiltrup, Germany).

The thus electrodeposition coated panels were rinsed and dried in the oven at a temperature of 175 °C for 15 min and ended up with a thickness of 18-22 µm prior to cross-cut testing and electrochemical delamination testing as described above.

### Test Results

Table 3 below shows the results from the pickling weight loss determination and confirms that the inventive mixtures of at least two different amino organophosphonic acid derivatives of formula (I) show a mild, but sufficient pickling, all in the range of 0.8 g/m² to 1.2 g/m² on both, CRS and HDG, and an excellent balance in pickling weight loss of just 0.1 g/m² and 0.2 g/m².

To the contrary, using the pickling solutions comprising only one organophosphonic acid (C1) or amino organophosphonic acid derivatives of formula (I) (C2), show aggressive pickling on HDG in both cases accompanied by an unbalanced pickling or in case of C3 (only one amino organophosphonic acid derivative of formula (I)) an insufficient pickling on HDG.

In Example I2 it is shown that the addition of a vinyl acetate-vinyl pyrrolidone copolymer is suitable to fine-tune the pickling weight loss to slightly lower values without affecting the Δpwl, which is desired in some cases.

**Table 3**

| Pickling Composition | Pickling Weight Loss [g/m²] | | Δ Pickling Weight Loss [g/m²] |
|---|---|---|---|
| | CRS | HDG | |
| C1 | 0.7 | 2.6 | 1.9 |
| C2 | 0.7 | 7.5 | 6.8 |
| C3 | 0.5 | 0.3 | 0.2 |
| I1 | 1.1 | 1.2 | 0.1 |
| I2 | 0.9 | 0.8 | 0.1 |

The results shown in Table 4 below reflect the weight of the zinc phosphate conversion layers in g/m² calculated as P₂O₅ obtained on CRS and HDG panels, pickled for 5 and 10 min respectively. The target value is preferably below 4 g/m² for CRS and below 3.5 g/m² for HDG, which is observed in all cases, when pickling is carried out for 5 min. When pickling was carried out for 10 min, composition I4 is slightly less preferred, because the target value is slightly exceeded, showing that Δn = 1 is preferred over Δn =2 in the compositions according to the present invention.

**Table 4**

| Pickling Composition | Conversion Layer Weight / Zinc Phosphate Conversion [g/m²] | |
|---|---|---|
| | CRS (5 min / 10 min) | HDG (5 min / 10 min) |
| I3 | 3.7 / 3.4 | 3.1 / 3.1 |
| I4 | 3.7/4.6 | 3.0/3.2 |

The results shown in Table 5 below reflect the weight of the Oxsilane^{®} 9832 conversion layers in g/m² calculated as Zr obtained on CRS and HDG panels, pickled for 5 and 10 min, respectively. The target value is preferably below 100 g/m² for CRS and below 150 g/m² for HDG, which is observed in all cases, when pickling is carried out for 5 and 10 min.

**Table 5**

| Pickling Composition | Conversion Layer Weight / Oxsilan^{®} 9832 Conversion [g/m²] | |
|---|---|---|
| | CRS (5 min / 10 min) | HDG (5 min / 10 min) |
| I3 | 53/56 | 59 / 59 |
| I4 | 82 / 59 | 66 / 67 |

The results shown in Table 6 below reflect the weight of the Oxsilane^{®} 9810/2 conversion layers in g/m² calculated as Zr obtained on CRS and HDG panels, pickled for 5 and 10 min, respectively. The target value is preferably below 200 g/m² for CRS and below 150 g/m² for HDG, which is observed in all cases, when pickling is carried out for 5 and 10 min.

**Table 6**

| Pickling Composition | Conversion Layer Weight / Oxsilan^{®} 9810/2 Conversion [g/m²] | |
|---|---|---|
| | CRS (5 min / 10 min) | HDG (5 min / 10 min) |
| I3 | 131 / 147 | 124/128 |
| I4 | 195/172 | 127 / 135 |

Table 7 shows the cross-cut adhesion test results obtained for CRS panels, pickled for 5 and 10 min, respectively, and conversion coated with Oxsilan^{®} 9832 and Oxsilan^{®} 9810/2, respectively, before applying, rinsing, drying and curing a CathoGuard^{®} 800 cathodic electrodeposition coating layer. As all examples show, no adhesion failure is observed for any sample.

**Table 7**

| Pickling Composition | Cross Cut Adhesion Test Results after Electrodeposition Coating with CathoGuard^{®} 800 | |
|---|---|---|
| | CRS/Oxsilan^{®} 9832 (5 min/10 min) | CRS/Oxsilan^{®} 9810/2 (5 min/10 min) |
| I3 | 0/0 | 0/0 |
| I4 | 0/0 | 0/0 |

Table 8 shows the results from the electrochemical delamination test on CRS/Oxsilan^{®} 9832 coated panels.

**Table 8**

| Pickling Composition | Electrochemical Delamination in [mm] |
|---|---|
| | CRS/Oxsilan^{®} 9832 (5 min) |
| I3 | < 1 |
| I4 | < 1 |

Thus, Tables 7 and 8 show that the coating layers applied to inventively pickled metallic substrates possess a perfect adhesion in the cross-cut adhesion test as well as the electrochemical delamination test. A good delamination value is a value < 2.0 mm. Both samples show very good values below 1 mm.

## Claims

1. An aqueous composition having a pH value at 55 °C in the range from 5 to 9, containing at least two different amino organophosphonic acid derivatives of formula (I) 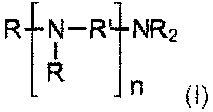 wherein
residues R independently of each other are CH₂-PO(OR")₂,
residues R' independently of each other are alkylene residues with 2 to 4 carbon atoms,
residues R" independently of each other are H, Na, K, Li or NH₄; and
n is an integer from 0 to 4;
and wherein the at least two different amino organophosphonic acid derivatives differ in the value of n; and
wherein the amount of all amino organophosphonic acid derivatives of formula (I) contained in the composition ranges from 1.0 to 8.0 wt.-%, based on the total weight of the composition and being calculated as free acid.

2. The aqueous composition according to claim 1, wherein R' is an alkylene with 2 or 3 carbon atoms; R" is selected from H, K and Na; and n is an integer from 0 to 3.

3. The aqueous composition according to claim 2, wherein R' is CH₂CH₂, R" is selected from H, K and Na; and n is 0, 1 or 2.

4. The aqueous composition according to any one of claims 1 to 3, having a pH value from 6.0 to 8.0.

5. The aqueous composition according to any one of claims 1 to 4, wherein the amount of all amino organophosphonic acid derivatives of formula (I) having the same value of n ranges from 0.5 to 4.0 wt.-%, based on the total weight of the composition and being calculated as free acid.

6. The aqueous composition according to any one of claims 1 to 5, wherein the amount of all amino organophosphonic acid derivatives of formula (I) contained in the composition ranges from 1.5 to 6.0 wt.-%, based on the total weight of the composition and being calculated as free acid.

7. The aqueous composition according to any one of claims 1 to 6, wherein the weight ratio of the sum of amino organophosphonic acid derivatives of formula (I) having a particular value of n to the sum of amino organophosphonic acid derivatives of formula (I) having another particular value of n is in the range from 1:4 to 4:1 for any combination of two different values of n; the weight ratios being calculated for the free acid form of the amino organophosphonic acid derivatives of formula (I).

8. The aqueous composition according to any one of claims 1 to 7, comprising a vinyl acetate-vinyl pyrrolidone random copolymer.

9. The aqueous composition according to any one of claims 1 to 8, wherein the total amount of further ingredients, which differ from the amino organophosphonic acid derivatives of formula (I), is less than 50 wt.-% of the combined amount of ingredients consisting of the further ingredients and the amino organophosphonic acid derivatives of formula (I).

10. A method for pickling a metallic substrate comprising at least one step of contacting the metallic substrate with an aqueous composition according to any one of claims 1 to 9.

11. The method for pickling a metallic substrate according to claim 10, comprising
(i) a step of contacting the metallic substrate with a cleaning composition; or
(ii) a step of contacting the metallic substrate with a cleaning composition followed by a step of rinsing the metallic substrate with a first rinsing composition; or
(iii) a step of contacting the metallic substrate with a cleaning composition followed by a step of rinsing the metallic substrate with a first rinsing composition followed by a step of rinsing the metallic substrate with a second rinsing composition; wherein (i) or (ii) or (iii) is followed by
(iv) a step of contacting the metallic substrate with a composition according to any one of claims 1 to 9, followed by
(v) a step of rinsing the metallic substrate with a third rinsing composition; or
(vi) a step of rinsing the metallic substrate with a third rinsing composition followed by a step of rinsing the metallic substrate with a fourth rinsing composition; or
(vii) a step of rinsing the metallic substrate with a third rinsing composition followed by a step of rinsing the metallic substrate with a fourth rinsing composition followed by a step of rinsing the metallic substrate with a fifth rinsing composition.

12. The method for pickling a metallic substrate according to claim 10 or 11, wherein the metallic substrate is selected from the group consisting of steel, galvanized steel and aluminum and its alloys.

13. A method for coating a metallic substrate comprising at least
(a) the method for pickling a metallic substrate according to any one of claims 10 to 12, followed by
(b) a step of coating the thus pickled metallic substrate with a conversion coating composition; or
(c) step (b) followed by a step of applying an electrodeposition coating composition; or
(d) step (b) followed by step (c) followed by one or more steps of applying one or more further coating composition(s).

14. The method for coating a metallic substrate according to claim 13, wherein the conversion coating composition used in step (b) is selected from the group consisting of
i. phosphate conversion coating compositions containing zinc ions and at least one of manganese ions and nickel ions,
ii. organosilane based conversion coating compositions containing at least one organosilane and/or its hydrolysis products and/or its condensation products; and
iii. passivating conversion coating compositions containing at least one compound selected from the groups of zirconium compounds, titanium compounds and hafnium compounds; and
in case of using a phosphate conversion coating composition, the pickled metallic substrate obtained in step (a) is contacted with an activation composition comprising zinc phosphate crystals and/or titanium phosphate crystals prior to carrying out step (b); and
in case of using a phosphate conversion coating composition, the conversion coated metallic substrate obtained in step (b) is contacted with a passivation composition comprising at least one compound selected from the groups of zirconium compounds, titanium compounds and hafnium compounds.

15. The method for coating a metallic substrate according to claim 13 or 14, wherein the electrodeposition coating composition used in step (c) is selected from the group consisting of anodic and cathodic electrodeposition coating compositions; and in case of using cathodic electrodeposition coating compositions the cathodic electrodeposition coating compositions are selected from the group consisting epoxy-type electrodeposition coating compositions and poly(meth)acrylate-type electrodeposition coating compositions; and subsequently to step (c), drying and curing the electrodeposition coating.

16. The method for coating a metallic substrate according to any one of claims 13 to 15, wherein the further coating compositions used in step (d) are selected from filler compositions, basecoat compositions and clear coat coating compositions.

## Patentansprüche

1. Wässrige Zusammensetzung mit einem pH-Wert bei 55 °C in dem Bereich von 5 bis 9, die wenigstens zwei verschiedene Aminoorganophosphonsäurederivate der Formel (I) enthält, 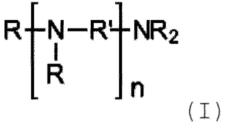 wobei
Reste R unabhängig voneinander CH₂-PO(OR")₂ sind,
Reste R' unabhängig voneinander Alkylenreste mit 2 bis 4 Kohlenstoffatomen sind,
Reste R" unabhängig voneinander H, Na, K, Li oder NH₄ sind; und
n eine ganze Zahl von 0 bis 4 ist;
und wobei sich die wenigstens zwei verschiedenen Aminoorganophosphonsäurederivate in dem Wert von n unterscheiden; und
wobei die Menge aller in der Zusammensetzung enthaltenen Aminoorganophosphonsäurederivate der Formel (I) in dem Bereich von 1,0 bis 8,0 Gew.-%, bezogen auf das Gesamtgewicht der Zusammensetzung und berechnet als freie Säure, liegt.

2. Wässrige Zusammensetzung gemäß Anspruch 1, wobei R' ein Alkylen mit 2 oder 3 Kohlenstoffatomen ist; R" ausgewählt ist aus H, K und Na; und n eine ganze Zahl von 0 bis 3 ist.

3. Wässrige Zusammensetzung gemäß Anspruch 2, wobei R' CH₂CH₂ ist, R" ausgewählt ist aus H, K und Na; und n 0, 1 oder 2 ist.

4. Wässrige Zusammensetzung gemäß einem der Ansprüche 1 bis 3 mit einem pH-Wert von 6,0 bis 8,0.

5. Wässrige Zusammensetzung gemäß einem der Ansprüche 1 bis 4, wobei die Menge aller Aminoorganophosphonsäurederivate der Formel (I) mit dem gleichen Wert von n in dem Bereich von 0,5 bis 4,0 Gew.-%, bezogen auf das Gesamtgewicht der Zusamnmensetzung und berechnet als freie Säure, liegt.

6. Wässrige Zusammensetzung gemäß einem der Ansprüche 1 bis 5, wobei die Menge aller in der Zusammensetzung enthaltenen Aminoorganophosphonsäurederivate der Formel (I) in dem Bereich von 1,5 bis 6,0 Gew.-%, bezogen auf das Gesamtgewicht der Zusammensetzung und berechnet als freie Säure, liegt.

7. Wässrige Zusammensetzung gemäß einem der Ansprüche 1 bis 6, wobei das Gewichtsverhältnis der Summe von Aminoorganophosphonsäurederivaten der Formel (I) mit einem bestimmten Wert von n zu der Summe von Aminoorganophosphonsäurederivaten der Formel (I) mit einem anderen bestimmten Wert von n für jede Kombination von zwei verschiedenen Werten von n in dem Bereich von 1:4 bis 4:1 liegt; wobei die Gewichtsverhältnisse für die freie Säureform der Aminoorganophosphonsäurederivate der Formel (I) berechnet sind.

8. Wässrige Zusammensetzung gemäß einem der Ansprüche 1 bis 7, umfassend ein statistisches Vinylacetat-Vinylpyrrolidon-Copolymer.

9. Wässrige Zusammensetzung gemäß einem der Ansprüche 1 bis 8, wobei die Gesamtmenge von weiteren Inhaltsstoffen, die von den Aminoorganophosphonsäurederivaten der Formel (I) verschieden sind, weniger als 50 Gew.-% der kombinierten Menge von Inhaltsstoffen bestehend aus den weiteren Inhaltsstoffen und den Aminoorganophosphonsäurederivaten der Formel (I) beträgt.

10. Verfahren zum Beizen eines metallischen Substrats, umfassend wenigstens einen Schritt des Inkontaktbringens des metallischen Substrats mit einer wässrigen Zusammensetzung gemäß einem der Ansprüche 1 bis 9.

11. Verfahren zum Beizen eines metallischen Substrats gemäß Anspruch 10, umfassend
(i) einen Schritt des Inkontaktbringens des metallischen Substrats mit einer Reinigungszusammensetzung; oder
(ii) einen Schritt des Inkontaktbringens des metallischen Substrats mit einer Reinigungszusammensetzung, gefolgt von einem Schritt des Spülens des metallischen Substrats mit einer ersten Spülzusammensetzung; oder
(iii) einen Schritt des Inkontaktbringens des metallischen Substrats mit einer Reinigungszusammensetzung, gefolgt von einem Schritt des Spülens des metallischen Substrats mit einer ersten Spülzusammensetzung, gefolgt von einem Schritt des Spülens des metallischen Substrats mit einer zweiten Spülzusammensetzung; wobei (i) oder (ii) oder (iii) gefolgt wird von
(iv) einem Schritt des Inkontaktbringens des metallischen Substrats mit einer Zusammensetzung gemäß einem der Ansprüche 1 bis 9, gefolgt von
(v) einem Schritt des Spülens des metallischen Substrats mit einer dritten Spülzusammensetzung; oder
(vi) einem Schritt des Spülens des metallischen Substrats mit einer dritten Spülzusammensetzung, gefolgt von einem Schritt des Spülens des metallischen Substrats mit einer vierten Spülzusammensetzung; oder
(vii) einem Schritt des Spülens des metallischen Substrats mit einer dritten Spülzusammensetzung, gefolgt von einem Schritt des Spülens des metallischen Substrats mit einer vierten Spülzusammensetzung, gefolgt von einem Schritt des Spülens des metallischen Substrats mit einer fünften Spülzusammensetzung.

12. Verfahren zum Beizen eines metallischen Substrats gemäß Anspruch 10 oder 11, wobei das metallische Substrat ausgewählt ist aus der Gruppe bestehend aus Stahl, galvanisiertem Stahl und Aluminium und seinen Legierungen.

13. Verfahren zur Beschichtung eines metallischen Substrats, umfassend wenigstens
(a) das Verfahren zum Beizen eines metallischen Substrats gemäß einem der Ansprüche 10 bis 12, gefolgt von
(b) einem Schritt des Beschichtens des so gebeizten metallischen Substrats mit einer Konversionsbeschichtungszusammensetzung; oder
(c) Schritt (b) gefolgt von einem Schritt des Aufbringens einer Elektroabscheidungs-Beschichtungszusammensetzung; oder
(d) Schritt (b) gefolgt von Schritt (c) gefolgt von einem oder mehreren Schritten des Aufbringens einer oder mehrerer weiterer Beschichtungszusammensetzung(en).

14. Verfahren zur Beschichtung eines metallischen Substrats gemäß Anspruch 13, wobei die bei Schritt (b) verwendete Konversionsbeschichtungszusammensetzung ausgewählt ist aus der Gruppe bestehend aus
i. Phosphat-Konversionsbeschichtungszusammensetzungen, die Zinkionen und wenigstens eines von Manganionen und Nickelionen enthalten,
ii. Konversionsbeschichtungszusammensetzungen auf Organosilanbasis, die wenigstens ein Organosilan und/oder seine Hydrolyseprodukte und/oder seine Kondensationsprodukte enthält; und
iii. passivierenden Konversionsbeschichtungszusammensetzungen, die wenigstens eine Verbindung ausgewählt aus den Gruppen von Zirkoniumverbindungen, Titanverbindungen und Hafniumverbindungen enthalten; und
wobei im Fall der Verwendung einer Phosphat-Konversionsbeschichtungszusammensetzung das bei Schritt (a) erhaltene gebeizte metallische Substrat vor der Durchführung von Schritt (b) mit einer Aktivierungszusammensetzung, die Zinkphosphatkristalle und/oder Titanphosphatkristalle umfasst, in Kontakt gebracht wird; und
im Fall der Verwendung einer Phosphat-Konversionsbeschichtungszusammensetzung das bei Schritt (b) erhaltene konversionsbeschichtete metallische Substrat mit einer Passivierungszusammensetzung, die wenigstens eine Verbindung ausgewählt aus den Gruppen von Zirkoniumverbindungen, Titanverbindungen und Hafniumverbindungen umfasst, in Kontakt gebracht wird.

15. Verfahren zur Beschichtung eines metallischen Substrats gemäß Anspruch 13 oder 14, wobei die bei Schritt (c) verwendete Elektroabscheidungs-Beschichtungszusammensetzung ausgewählt ist aus der Gruppe bestehend aus anodischen und kathodischen Elektroabscheidungs-Beschichtungszusammensetzungen; und in dem Fall der Verwendung von kathodischen Elektroabscheidungs-Beschichtungszusammensetzungen die kathodischen Elektroabscheidungs-Beschichtungszusammensetzungen ausgewählt sind aus der Gruppe bestehend aus Elektroabscheidungs-Beschichtungszusammensetzungen vom Epoxy-Typ und Elektroabscheidungs-Beschichtungszusammensetzungen vom Poly(meth)acrylat-Typ; und anschließend an Schritt (c) Trocknen und Härten der Elektroabscheidungsbeschichtung.

16. Verfahren zur Beschichtung eines metallischen Substrats gemäß einem der Ansprüche 13 bis 15, wobei die bei Schritt (d) verwendeten weiteren Beschichtungszusammensetzungen ausgewählt sind aus Füllstoffzusammensetzungen,
Grundierungszusammensetzungen und Klarlack-Beschichtungszusammensetzungen.

## Revendications

1. Composition aqueuse ayant une valeur de pH à 55 °C dans la plage de 5 à 9, contenant au moins deux dérivés d'acide amino organophosphonique différents de formule (I) 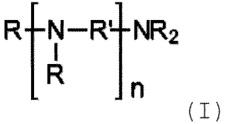
les radicaux R étant indépendamment les uns des autres CH₂-PO(OR")₂
les radicaux R' étant indépendamment les uns des autres des radicaux alkylène comportant 2 à 4 atomes de carbone, les radicaux R" étant indépendamment les uns des autres H, Na, K, Li ou NH₄ ; et
n étant un entier de 0 à 4 ;
et les au moins deux dérivés d'acide amino organophosphonique différents étant différents dans la valeur de n ; et
la quantité de tous les dérivés d'acide amino organophosphonique de formule (I) contenus dans la composition se situant dans la plage de 1,0 à 8,0 % en poids, sur la base du poids total de la composition et étant calculée comme acide libre.

2. Composition aqueuse selon la revendication 1, R' étant un alkylène comportant 2 ou 3 atomes de carbone ; R'' étant choisi parmi H, K et Na ; et n étant un entier de 0 à 3.

3. Composition aqueuse selon la revendication 2, R' étant CH₂CH₂, R" étant choisi parmi H, K et Na ; et n étant 0, 1 ou 2.

4. Composition aqueuse selon l'une quelconque des revendications 1 à 3, ayant une valeur de pH de 6,0 à 8,0.

5. Composition aqueuse selon l'une quelconque des revendications 1 à 4, la quantité de tous les dérivés d'acide amino organophosphonique de formule (I) ayant la même valeur de n se situant dans la plage de 0,5 à 4,0 % en poids, sur la base du poids total de la composition et étant calculée comme acide libre.

6. Composition aqueuse selon l'une quelconque des revendications 1 à 5, la quantité de tous les dérivés d'acide amino organophosphonique de formule (I) contenus dans la composition se situant dans la plage de 1,5 à 6,0 % en poids, sur la base du poids total de la composition et étant calculée comme acide libre.

7. Composition aqueuse selon l'une quelconque des revendications 1 à 6, le rapport en poids de la somme des dérivés d'acide amino organophosphonique de formule (I) ayant une valeur particulière de n sur la somme des dérivés d'acide amino organophosphonique de formule (I) ayant une autre valeur particulière de n étant dans la plage de 1:4 à 4:1 pour une quelconque combinaison de deux valeurs différentes de n ; les rapports en poids étant calculés pour la forme d'acide libre des dérivés d'acide amino organophosphonique de formule (I).

8. Composition aqueuse selon l'une quelconque des revendications 1 à 7, comprenant un copolymère statistique d'acétate de vinyle-vinylpyrrolidone.

9. Composition aqueuse selon l'une quelconque des revendications 1 à 8, la quantité totale d'autres ingrédients, qui sont différents des dérivés d'acide amino organophosphonique de formule (I), étant inférieure à 50 % en poids de la quantité combinée d'ingrédients constitués des autres ingrédients et des dérivés d'acide amino organophosphonique de formule (I).

10. Procédé pour le décapage d'un substrat métallique comprenant au moins une étape de mise en contact du substrat métallique avec une composition aqueuse selon l'une quelconque des revendications 1 à 9.

11. Procédé pour le décapage d'un substrat métallique selon la revendication 10, comprenant
(i) une étape de mise en contact du substrat métallique avec une composition de nettoyage ; ou
(ii) une étape de mise en contact du substrat métallique avec une composition de nettoyage suivie par une étape de rinçage du substrat métallique avec une première composition de rinçage ; ou
(iii) une étape de mise en contact du substrat métallique avec une composition de nettoyage suivie par une étape de rinçage du substrat métallique avec une première composition de rinçage suivie par une étape de rinçage du substrat métallique avec une deuxième composition de rinçage ; (i) ou (ii) ou (iii) étant suivi par
(iv) une étape de mise en contact du substrat métallique avec une composition selon l'une quelconque des revendications 1 à 9, suivie par
(v) une étape de rinçage du substrat métallique avec une troisième composition de rinçage ; ou
(vi) une étape de rinçage du substrat métallique avec une troisième composition de rinçage suivie par une étape de rinçage du substrat métallique avec une quatrième composition de rinçage ; ou
(vii) une étape de rinçage du substrat métallique avec une troisième composition de rinçage suivie par une étape de rinçage du substrat métallique avec une quatrième composition de rinçage par une étape de rinçage du substrat métallique avec une cinquième composition de rinçage.

12. Procédé pour le décapage d'un substrat métallique selon la revendication 10 ou 11, le substrat métallique étant choisi dans le groupe constitué par l'acier, l'acier galvanisé et l'aluminium et ses alliages.

13. Procédé pour le revêtement d'un substrat métallique comprenant au moins
(a) le procédé pour le décapage d'un substrat métallique selon l'une quelconque des revendications 10 à 12, suivi par
(b) une étape de revêtement du substrat métallique ainsi décapé avec une composition de revêtement de conversion ; ou
(c) l'étape (b) suivie par une étape d'application d'une composition de revêtement par électrodéposition ; ou
(d) l'étape (b) suivie par l'étape (c) suivie par une ou plusieurs étapes d'application d'une ou plusieurs composition(s) de revêtement supplémentaire(s).

14. Procédé pour le revêtement d'un substrat métallique selon la revendication 13, la composition de revêtement de conversion utilisée dans l'étape (b) étant choisie dans le groupe constitué par
i. des compositions de revêtement de conversion de phosphate contenant des ions zinc et au moins l'un parmi des ions manganèse et des ions nickel,
ii. des compositions de revêtement de conversion à base d'organosilanes contenant au moins un organosilane et/ou ses produits d'hydrolyse et/ou ses produits de condensation ; et
iii. des compositions de revêtement de conversion de passivation contenant au moins un composé choisi dans les groupes de composés du zirconium, des composés du titane et des composés du hafnium ; et
dans le cas de l'utilisation d'une composition de revêtement de conversion de phosphate, le substrat métallique décapé obtenu dans l'étape (a) est mis en contact avec une composition d'activation comprenant des cristaux de phosphate de zinc et/ou des cristaux de phosphate de titane avant de réaliser l'étape (b) ; et
dans le cas de l'utilisation d'une composition de revêtement de conversion de phosphate, le substrat métallique revêtu par conversion obtenu dans l'étape (b) est mis en contact avec une composition de passivation comprenant au moins un composé choisi parmi les groupes de composés du zirconium, des composés du titane et des composés du hafnium.

15. Procédé pour le revêtement d'un substrat métallique selon la revendication 13 ou 14, la composition de revêtement par électrodéposition utilisée dans l'étape (c) étant choisie dans le groupe constitué par des compositions de revêtement par électrodéposition anodique et cathodique ; et dans le cas de l'utilisation de compositions de revêtement par électrodéposition cathodique les compositions de revêtement par électrodéposition cathodique sont choisies dans le groupe constitué par des compositions de revêtement par électrodéposition de type époxy et des compositions de revêtement par électrodéposition de type poly(méth)acrylate ; et subséquemment à l'étape (c), le séchage et le durcissement du revêtement par électrodéposition.

16. Procédé pour le revêtement d'un substrat métallique selon l'une quelconque des revendications 13 à 15, les compositions de revêtement supplémentaires utilisées dans l'étape (d) étant choisies parmi des compositions de charge, des compositions de revêtement de base et des compositions de revêtement transparent.
